Europäisches Patentamt

European Patent Office

Office européen des brevets

(19)

(11) Veröffentlichungsnummer: **0 289 845 B1**

(12) **EUROPÄISCHE PATENTSCHRIFT**

(45) Veröffentlichungstag der Patentschrift: **11.11.92**

(21) Anmeldenummer: **88106167.5**

(22) Anmeldetag: **19.04.88**

(51) Int. Cl.5: **B65G 35/00**, B24C 3/26, B08B 3/04, B07B 1/22

(54) **Vorrichtung zum kontinuierlichen Förden und Drehen von Werkstücken.**

(30) Priorität: **08.05.87 CH 1770/87**

(43) Veröffentlichungstag der Anmeldung:
**09.11.88 Patentblatt 88/45**

(45) Bekanntmachung des Hinweises auf die Patenterteilung:
**11.11.92 Patentblatt 92/46**

(84) Benannte Vertragsstaaten:
**AT BE CH DE ES FR GB GR IT LI NL SE**

(56) Entgegenhaltungen:
EP-A- 0 205 738      DE-A- 1 947 371
DE-A- 2 032 853      DE-A- 2 035 557
DE-A- 3 526 606      DE-C- 66 868
DE-C- 151 772        DE-C- 333 854
DE-C- 3 223 689      GB-A- 282 879
US-A- 1 343 292

(73) Patentinhaber: **Hunziker, Werner
Im Köpfli 262
CH-5054 Kirchleerau(CH)**

(72) Erfinder: **Hunziker, Werner
Im Köpfli 262
CH-5054 Kirchleerau(CH)**

(74) Vertreter: **Fillinger, Peter, Dr.
Rütistrasse 1a
CH-5400 Baden(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung bezieht sich auf eine Vorrichtung zum kontinuierlichen Fördern und Drehen von Werkstücken gemäss dem Oberbegriff des Anspruchs 1.

Derartige Vorrichtungen sind bekannt und beispielsweise in der EP-A 205 738 beschrieben.

Diese bekannte Vorrichtung hat den Nachteil, dass damit flache, plättchenförmige oder sehr schwere Werkstücke nicht transportiert werden können.

Eine Vorrichtung dieser Art ist auch aus der DE-A 1 947 371 bekannt. Diese Druckschrift beschreibt nebst einem gummielastischen, rohrförmigen Förderer einen solchen, dessen Mantel aus einer Vielzahl von parallel verlaufenden Stäben oder dgl. ohne gegenseitige Distanzierung gebildet wird. Deren Enden sind an ringförmigen, unter sich parallelen und zur Drehachse geneigten Körpern gelagert. Die Besonderheit an dieser Vorrichtung ist, dass die gegeneinander verschieblichen und aneinander geführten Stäbe keine längsachsiale Bewegung ausführen können, da sie sich beim Drehen des Rohres gegenseitig verklemmen.

Die vorliegende Erfindung stellt sich die Aufgabe, eine Vorrichtung der eingangs erwähnten Art derart zu verbessern, dass die genannten Nachteile entfallen. Erfindungsgemäss wird diese Aufgabe gelöst durch die kennzeichnenden Merkmale des Anspruchs 1.

Um den Käfig sehr lange ausführen zu können, so dass er sich über mehrere Behandlungsstationen erstreckt, ist vorzugsweise vorgesehen, dass er zwischen seinen Enden in der Schlaufe von mindestens einem endlosen Strang aufliegt. Dadurch kann der Käfig ohne Durchbiegung unter der Last der Werkstücke praktisch in beliebiger Länge ausgeführt werden.

Anhand der beiliegenden schematischen Zeichnung wird die Erfindung beispielsweise erläutert. Es zeigen:

| Fig. 1 | einen Längsschnitt durch eine Vorrichtung längs der Linie I-I in Fig. 2, |
| Fig. 2 | eine Draufsicht auf eine Vorrichtung, wobei Teile weggebrochen sind, |
| Fig. 3 und 4 | zwei Ausschnitte aus dem Käfig in vergrösserter Darstellung, |
| Fig. 5 | eine Variante des Ringes nach Fig. 4 in einer Ansicht V-V in Fig. 4 und |
| Fig. 6 | eine dem Detail VI in Fig. 1 entsprechende Darstellung eines zweiten Ausführungsbeispiels des Käfigs. |

In einer Bearbeitungskammer 1, die durch ein Gehäuse 3 begrenzt ist, ist ein um die Achse A drehbar gelagerter Käfig 9 eingesetzt, dessen die Stirnseiten bildenden Endringe 11, 13 ausserhalb der Kammer 1 auf um vertikale Achsen B schwenkbar angeordneten Führungsscheiben 15, 17 abgestützt sind. Die Führungsscheiben 15, 17 sind an Trägern 19 am Gehäuse 1 gelagert und können mittels verzahnten Haltemitteln 21 in verschiedenen Winkeln α zur Achse A eingestellt und gehalten werden. An den Führungsscheiben 15, 17 sind mindestens je drei Rollen 23 gelagert, deren geometrische Achsen sich in einem Punkt auf der Achse A schneiden und drei Rollen 25, deren Achsen rechtwinklig zur Achse B verlaufen. Diese Rollen 23, 25 bilden das Drehlager für die Endringe 11 und 13, die durch den Käfig 9 bildende, an den Endringen 11, 13 befestigte Stäbe, Seile oder Drähte 27 gegeneinander verspannt sind und an die Führungsscheiben 15, 17 herangezogen werden. Die Drähte 27 sind in den Endringen 11, 13 verankert, wobei die Verankerungen vorzugsweise aus kegelförmigen Bohrungen bestehen, die eine knickfreie Auslenkung in bescheidenem Ausmass zulassen. An den Endringen 11, 13 sind auf der dem Gehäuse 3 zugekehrten Seite ringförmige Ritzel 41 angebracht, über die je eine Kette oder ein Zahnriemen 43 gelegt ist, der im Eingriff mit von einem Motor 45 angetriebenen Ritzeln 47 steht. Die beiden Ritzel 47 sind durch eine Gelenkwelle 49 kraftschlüssig untereinander verbunden. Die Ritzel 41 können aus gehärtetem Material bestehen und zugleich als Lauffläche für die Rollen 23 dienen.

Die Endringe 11, 13 weisen eine kreisrunde zentrale Öffnung 51 auf. Die den zylinderförmigen Käfig 9 bildenden Drähte 27 sind parallel zur Drehachse A und in einem gegenseitigen Abstand angeordnet, dessen Betrag der Masse und der Grösse der zu bearbeitenden Werkstücke angepasst ist.

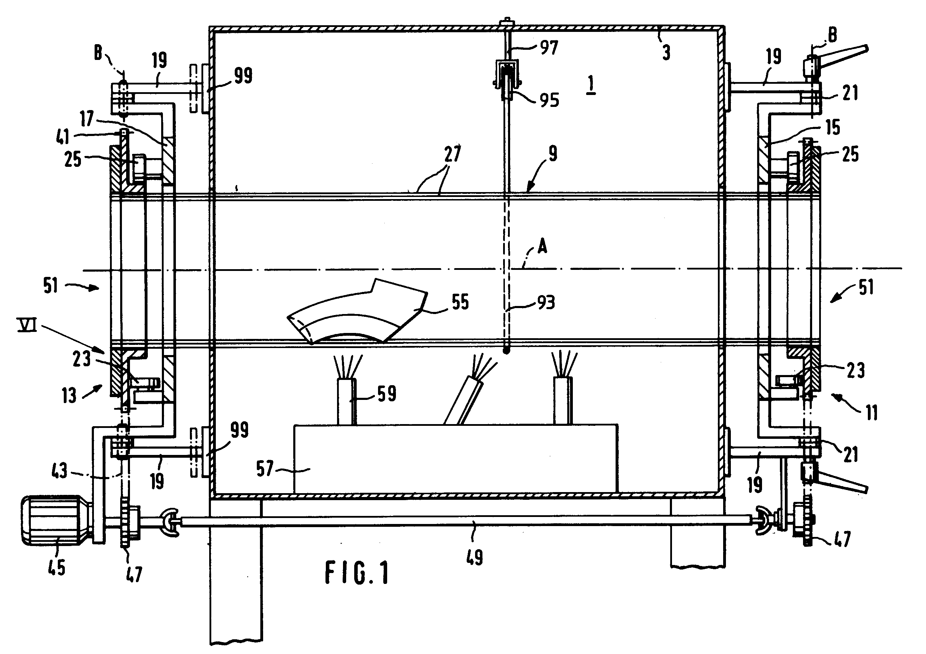

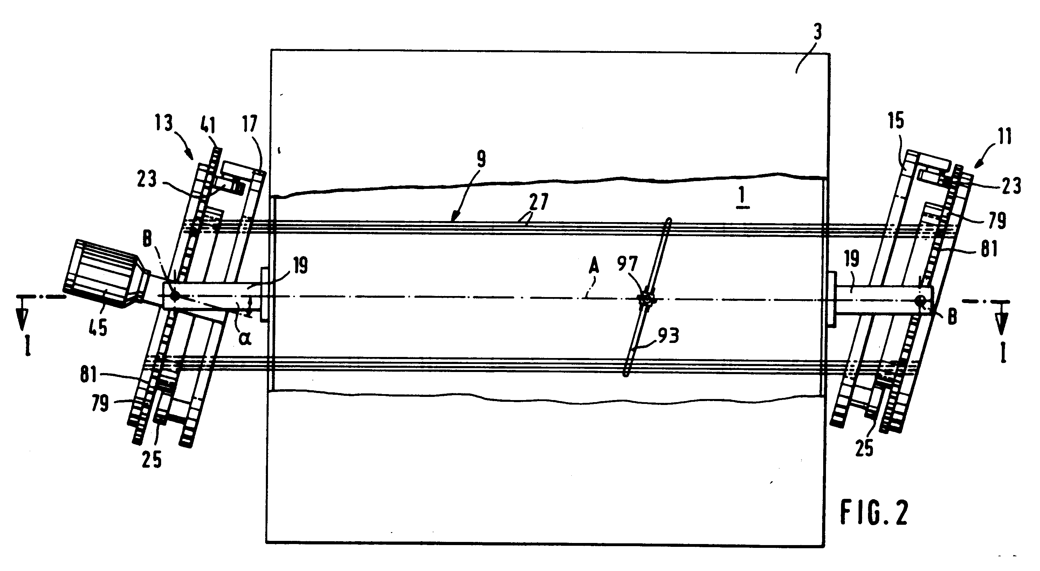

In der Figur 1 ist stellvertretend für ein Bearbeitungsmittel schematisch eine Strahlanlage 57 mit drei Strahldüsen 59 unterhalb dem Käfig 9 im Gehäuse 3 angeordnet, dessen Strahldüsen 59 durch den Käfig 9 hindurch auf das oder die im Käfig 9 liegenden Werkstücke 55 gerichtet sind.

Im folgenden wird die Funktionsweise der Vorrichtung näher erläutert. Das oder die zu bearbeitenden Werkstücke 55 werden von Hand oder mit einer Transportvorrichtung in den Käfig 9 eingebracht.

Durch die Schrägstellung der beiden Endringe 11, 13 um einen Winkel α zur Achse A bewirkt die axiale Relativbewegung der Drähte 27 einen axialen Vorschub der Werkstücke 55 in der einen oder anderen Richtung, je nach der Drehrichtung und der Lage der Endringe 11, 13. Die Werkstücke 55 können auf diese Weise allseitig und gleichmässig den Strahldüsen 59 ausgesetzt werden. Der Abstand von der Werkstückoberfläche der Strahldüsen 59 bleibt dabei im wesentlichen konstant, unabhängig von der Grösse der Werkstücke, da im wesentlichen nur die auf den Drähten 27 aufliegende, gegen die Strahldüsen 59 gerichtete Oberfläche bearbeitet wird. Mit dem Anstellwinkel $\alpha$ der Endringe 11, 13 und der Drehzahl des Käfigs 9 kann nicht nur die Verweilzeit der Werkstücke 55 innerhalb der Bearbeitungskammer 1, sondern auch die Verweilzeit über der jeweiligen Strahldüse bestimmt werden.

Anstelle gerader oder gewendelter Drähte 27 können auch selbsttragende Stäbe verwendet werden.

Der Endring 11 (wie auch der Endring 13) weist zwei miteinander fest verbundene Ringe auf, nämlich, einen im Querschnitt L-förmigen Lagerring 79 mit den Lagerflächen für die Rollen 23, 25 sowie einen daran befestigten Trägerring 81.

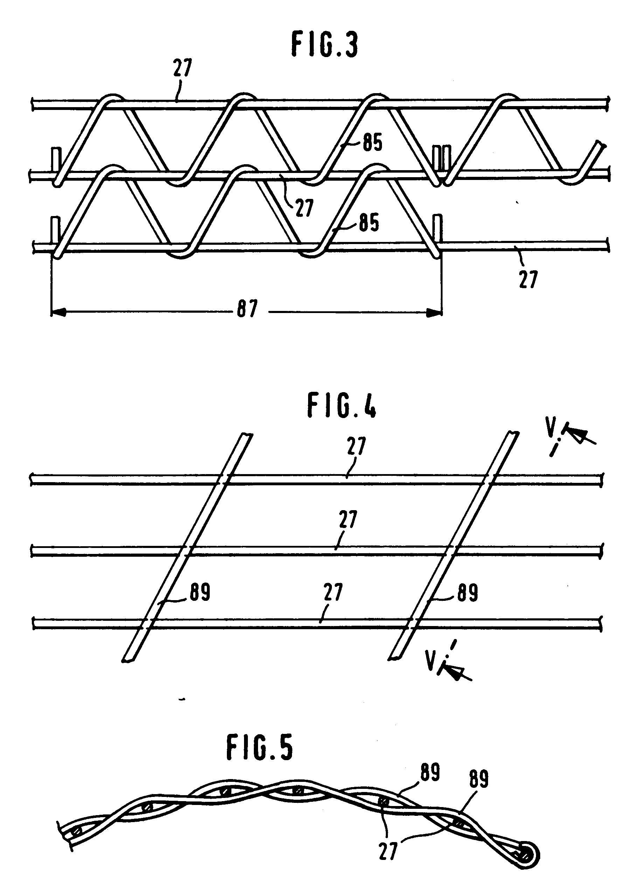

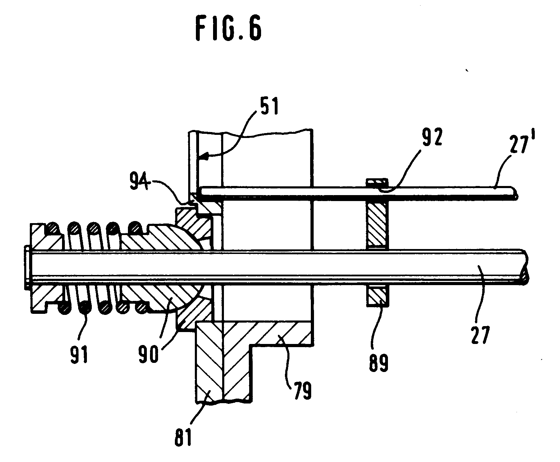

Beim Käfig 9 sind die parallel angeordneten Drähte 27 mit einer gegenseitigen Abstützung versehen. Diese gegenseitige Abstützung kann mit einem um zwei benachbarte Drähte wendelartig herumgeführten Querdraht 85 gebildet werden. Solche Querdrähte 85 können durchgehend über die ganze Länge der Drähte 27 ausgeführt oder in aneinander grenzende Abschnitte 87 unterteilt sein. Zwischen den Drähten 27 und 85 besteht keine feste Verbindung, so dass sich die Drähte 27 an den Berührungsstellen mit den Querdrähten 85 in Längsrichtung hin und her verschieben können. Eine weitere Möglichkeit der gegenseitigen Abstützung der Drähte 27 kann durch zu den Endringen 11, 13 parallele Ringe 89 (Fig. 4) erfolgen. Diese sind mit einer der Anzahl Drähte 27 entsprechenden Zahl von Bohrungen 91 durchsetzt, wobei die Drähte 27 mit Spiel durch diese Bohrungen 91 hindurch geführt sind. Durch bügel-oder rohrförmige, auf einige der Drähte 27 aufgeschobene Distanzhalter können die Ringe 89 in der gewünschten gegenseitigen Lage gehalten werden.

Wie Fig. 5 zeigt können die Ringe 89 auch aus einem offenen Drahtring gebildet sein, der abwechselnd über und unter den Drähten 27 vorbeigeführt ist. Die Enden der offenen Drahtringe 89 sind vorzugsweise als Öse gestaltet durch die einer der Drähte 27 geführt ist. Sich in Förderrichtung folgende Drahtringe 29 sind hinsichtlich ihrer Wellung so gegeneinander um die Förderachse 17 versetzt, dass jeder einzelne Draht 27 abwechselnd von einem Drahtring 29 unter- und vom folgenden überlaufen wird.

Durch die gegenseitige Abstützung der Drähte 27 können einerseits flache Werkstücke und anderseits schwere Werkstücke durch den Käfig 9 hindurch gefördert werden. Ist der Käfig 9 sehr lange ausgebildet, was dann der Fall ist, wenn er sich durch mehrere Bearbeitungskammern 1 hindurch erstrecken muss, wird vorzugsweise an einer oder mehreren Stellen ein Stützband 93 angebracht. Dieses Stützband 93, in Form eines endlosen Nylonkabels, einer Rollenkette oder dgl., ist einerseits mit dem Käfig 9 und anderseits um eine frei drehbar in einer Gabel gelagerte Umlenkrolle 95 herumgeführt, welche Gabel um einen vertikalen Achszapfen 97 schwenkbar ist. Während des Betriebs der Vorrichtung dreht sich das Stützband 93 mit dem Käfig 9 von dem es angetrieben wird. Durch den Einsatz von einem oder mehreren Stützbändern 93 wird ein Durchbiegen des Käfigs auch unter grosser Belastung verhindert.

Wie Fig. 6 zeigt sind die Stäbe 27 einerseits in Kugelgelenken 90 an den Trägerringen 81 gelagert und anderseits mittels Federn 91 auf Zug vorgespannt. Damit im Bereich der zentralen Öffnung 51 zum Inneren des Käfigs 9 keine Stufe entsteht, welche den Austritt der geförderten Teile erschwert, sind die Ringe 89 mit einem konzentrischen Innenkranz von Bohrungen 92 versehen. Diese achssymmetrisch um die Drehachse des Käfigs 9 angeordneten Bohrungen 92 sämtlicher Ringe 89 sind achsial ausgerichtet. Durch die achsial ausgerichteten Bohrungen sind weitere Stäbe 27' gesteckt, die endsseits frei auf der Innenfläche der zentralen Öffnung 51 des Trägerringes aufliegen und durch eine Ringrippe 94, Nase oder dgl. gegen ein längsachsiales und ungewolltes Verschieben gesichert sind. Die Stäbe 27' bilden einen zu den Stäben 27 parallelen, käfigförmigen Innenmantel kleineren Durchmessers. Die Anzahl der Stäbe 27' kann ein Mehrfaches von jener der Stäbe 27 betragen. Der Durchmesser der Stäbe 27' ist vorzugsweise wesentlich kleiner als jener der Stäbe 27. Die Ringe 89 können aus einem Stück oder aus Ringsegmenten gefertigt sein, welche vorzugsweise miteinander gelenkig verbunden sind.

## Patentansprüche

1. Vorrichtung zum kontinuierlichen Fördern und Drehen von Werkstücken (55) mit einem um seine Längsachse (A) drehbar gelagerten, rohrförmigen Förderer (9), dessen Mantel aus einer Vielzahl von zur Achse (A) parallel verlaufenden Stäben (27) oder Drähten besteht, deren Enden an ringförmigen, unter sich parallelen und zur Längsachse des Förderers geneigten Körpern (11, 13) gelagert sind, wobei der Förderer durch eine gegenseitige Distanzierung der Stäbe (27) oder Drähte über den ganzen Umfang käfigförmig gestaltet ist und bei drehendem Förderer im unten liegenden Bereich die Stäbe oder Drähte in Förderrichtung eine längsachsiale Bewegung ausführen, dadurch gekennzeichnet, dass die Stäbe oder Drähte (27) zwischen den ringförmigen Körpern (11, 13) durch Stützelemente (85, 89) gegenseitig abgestützt und hierfür die Stützelemente (85, 89) mit gelenkigem Spiel an den Stäben oder Drähten (27) gelagert sind, derart, dass bei drehendem Käfig in Längsrichtung der Stäbe oder Drähte (27) zwischen diesen und den Stützelementen (85, 89) zwanglos ein Ausgleich möglich ist.

2. Vorrichtung nach Anspruch 1, dadurch gekennzeichnet, dass die Stützelemente (85, 89) wendelartig um zwei benachbarte Drähte (27) herumgeführte Querdrähte (85) sind.

3. Vorrichtung nach Anspruch 1 oder 2, dadurch gekennzeichnet, dass die Stützelemente Ringe (89) sind.

4. Vorrichtung nach Anspruch 3, dadurch gekennzeichnet, dass die Ringe (89) von den Stäben oder Drähten (27) durchsetzte Bohrungen aufweisen.

5. Vorrichtung nach Anspruch 4, dadurch gekennzeichnet, dass die Ringe (89) abwechselnd über und unter den Stäben oder Drähten (27) durchgeführte Drahtringe sind.

6. Vorrichtung nach Anspruch 4, dadurch gekennzeichnet, dass die Drahtringe offen und mit ihren Enden jeweils an einem der Stäbe oder Drähte (27) festgelegt sind.

7. Vorrichtung nach einem der Ansprüche 4 bis 7, dadurch gekennzeichnet, dass zwischen den Ringen (89) längsachsial auf einzelne Stäbe oder Drähte (27) Distanzhalter aufgeschoben sind.

8. Vorrichtung nach einem der Ansprüche 1 bis 7, dadurch gekennzeichnet, dass der Käfig (9) zwischen seinen Enden in der Schlaufe eines endlosen Stranges (93) aufliegt.

9. Vorrichtung nach Anspruch 8, dadurch gekennzeichnet, dass der Strang (93) frei mitlaufend gelagert ist.

10. Vorrichtung nach Anspruch 4, dadurch gekennzeichnet, dass die Ringe (89) konzentrisch zu den Bohrungen einen Innenkranz von Bohrungen (92) aufweisen, welche achsial ausgerichtet sind und in die über die Länge des Käfigs (9) sich erstreckende zweite Stäbe (27') eingeschoben sind.

**Claims**

1. Device for the continuous conveying and turning of workpieces (55), with a tubular conveyor (9) which is mounted to be rotatable about its longitudinal axis (A) and whose envelope consists of a plurality of wires or rods (27) extending parallel to the axis (A) and with their ends mounted on annular elements (11, 13) which are parallel to one another and are inclined relatively to the longitudinal axis of the conveyor, the conveyor being given a cage-like form by spacing the wires or rods (27) relatively to one another over the entire circumference, the wires or rods carrying out a longitudinal axial movement in the conveying direction in the region situated below when the conveyor rotates, characterised in that the rods or wires (27) are supported on one another by supporting elements (85, 89) between the annular elements (11, 13), and for this the supporting elements (85, 89) are mounted with articulated play on the rods or wires (27) in such a manner that when the cage is rotating a compensation without constraints is possible in the longitudinal direction of the rods or wires (27) between these and the supporting elements (85, 89).

2. Device according to claim 1, characterised in that the supporting elements (85, 89) are transverse wires (85) which are taken helically around two neighbouring wires (27).

3. Device according to claim 1 or 2, characterised in that the supporting elements are rings (89).

4. Device according to claim 3, characterised in that the rings (89) have holes through which the rods or wires (27) extend.

5. Device according to claim 4, characterised in that the rings (89) are wire rings made to extend over and below the rods or wires (27) alternately.

6. Device according to claim 4, characterised in that the wire rings are open and have their ends in each case secured to one of the rods or wires (27).

7. Device according to one of claims 4 to 7, characterised in that spacer elements are fitted in a longitudinal-axis direction on to individual rods or wires (27) between the rings (89).

8. Device according to one of claims 1 to 7, characterised in that the cage (9) between its ends rests in the loop of an endless strand (93).

9. Device according to claim 8, characterised in that the strand (93) is mounted to be capable of freely accompanying travel.

10. Device according to claim 4, characterised in that the rings (89) comprise concentrically with the holes an inner circle of holes (92) which are aligned axially and into which there are inserted second rods (27') which extend over the length of the cage (9).

**Revendications**

1. Dispositif pour transporter et retourner en continu des pièces (55) à l'aide d'un convoyeur (9), tubulaire, monté à rotation sur son axe longitudinal (A), dont l'enveloppe est formée d'un grand nombre de tiges (27) ou de fils parallèles à l'axe (A), dont les extrémités sont montées sur des corps (11), (13) parallèles, inclinés par rapport à l'axe longitudinal du convoyeur, ce convoyeur ayant sur toute sa périphérie une forme de cage par l'écartement réciproque des tiges (27) ou des fils et lorsque le convoyeur tourne, dans la partie inférieure, les tiges ou les fils effectuent un mouvement de transfert suivant l'axe longitudinal, dispositif caractérisé en ce que les tiges ou les fils (27) sont soutenus réciproquement entre les corps annulaires (11, 13) par des éléments d'appui (85, 89) et pour cela les éléments d'appui (85, 89) sont montés sur les tiges ou les fils (27) avec un jeu d'articulations de façon que lorsque la cage tourne, il soit possible d'avoir une compensation non forcée dans la direction des tiges ou des fils (27), entre ceux-ci et les éléments d'appui (85, 89).

2. Dispositif selon la revendication 1, caractérisé en ce que les éléments d'appui (85, 89) passent en hélice autour de fils transversaux (85) passant autour de deux fils (27) voisins.

3. Dispositif selon la revendication 1 ou 2, caractérisé en ce que les éléments d'appui (89) sont des anneaux.

4. Dispositif selon la revendication 3, caractérisé en ce que les anneaux (89) comportent des perçages traversés par les tiges ou les fils (27).

5. Dispositif selon la revendication 4, caractérisé en ce que les anneaux (89) passent en alternance par-dessus et par-dessous les tiges ou les fils (27).

6. Dispositif selon la revendication 4, caractérisé en ce que les anneaux à fils sont ouverts et sont fixés par leurs extrémités, respectivement sur l'une des tiges ou l'un des fils (27).

7. Dispositif selon l'une des revendications 4 à 7, caractérisé en ce qu'entre les anneaux (89) on a engagé des organes d'écartement, allongés dans la direction axiale sur les différentes tiges ou fils (27).

8. Dispositif selon l'une des revendications 1 à 7, caractérisé en ce que la cage (9) s'appuie entre ses extrémités dans la boucle d'un cordon (93) sans fin.

9. Dispositif selon la revendication 8, caractérisé en ce que le cordon (93) est monté de manière à être entraîné librement.

10. Dispositif selon la revendication 4, caractérisé en ce que les anneaux (89) comportent concentriquement aux perçages, une couronne intérieure de perçages (92), ces perçages étant alignés suivant l'axe et sont engagés par-dessus chaque fois les secondes tiges (27') s'étendant sur la longueur de la cage (9).

FIG.1

EP 0 289 845 B1

FIG.2

EP 0 289 845 B1

# FIG.3

# FIG.4

# FIG.5

# FIG.6